# EUROPEAN PATENT SPECIFICATION

(11) **EP 2 492 115 B1**
(45) Date of publication and mention of the grant of the patent: **03.09.2014**
(21) Application number: 12000087.2
(22) Date of filing: 09.01.2012
(51) Int. Cl.: B60C 11/00, B60C 1/00

(54) **Radial tire for use in two-wheeled vehicle**
Radialreifen zur Verwendung in einem zweirädrigen Fahrzeug
Pneu radial à utiliser dans un véhicule à deux roues

(30) Priority: 28.02.2011 JP 2011041171
(43) Date of publication of application: 29.08.2012
(73) Proprietor: Sumitomo Rubber Industries, Ltd., Hyogo-ken (JP)
(72) Inventor: Hara, Kengo, Kobe-shi Hyogo 651-0072 (JP)
(74) Representative: Manitz, Finsterwald & Partner GbR

(56) References cited:
- EP-A1- 2 108 529
- EP-A2- 0 104 133
- DE-C1- 19 718 701
- JP-A- 63 134 311
- JP-A- 2008 221 895
- JP-U- 62 196 704

## Description

### BACKGROUND OF THE INVENTION

### Field of the Invention

The present invention relates to radial tires for use in two-wheeled vehicles.

Related pneumatic tires are known from DE 197 18 701 C1, EP 0 104 133 A2, JP 62 196 704 U14, JP 63134311 A and JP 2008 221895 A.

### Description of the Related Art

In the viewpoint of enhancement in productivity, a tire production method is sometimes used in which strips formed of an uncrosslinked rubber are helically wound to form components such as tread, sidewalls, and the like. Such a production method may be referred to as a strip winding method. An example of this production method is disclosed in JP2009-39883.

In consideration of enhancement of grip force, a crosslinked rubber having increased energy loss and a low complex elastic modulus is used for a tire tread in some cases. In this tread, an amount of heat generation is increased due to deformation, so that the tread is likely to be heated during running. Therefore, increase of a temperature of a road surface in summer causes excessive increase of the temperature of the tread, which is likely to soften the tread. In this case, a problem arises that the surface of the tread is excessively deformed, and the grip force cannot be sufficiently exerted.

Similarly, also when a long time running is performed in an endurance race or the like, a temperature of a tread is excessively increased due to heat generation, so that the grip force cannot be sufficiently exerted in some cases. Therefore, in a race, plural tires having treads the hardnesses of which are different from each other are prepared, and are selectively used depending on a condition. Thus, adjustment is made such that the grip force can be sufficiently exerted in the tire.

An object of the present invention is to make available a radial tire which is used for a two-wheeled vehicle and is capable of sufficiently exerting a grip force.

### SUMMARY OF THE INVENTION

A radial tire for use in a two-wheeled vehicle includes a tread having an outer surface that forms a tread surface. The tread includes a body formed of a first rubber composition, and a plurality of support portions that are formed of a second rubber composition, and that are aligned with each other in an axial direction. Each of the plurality of support portions extends from an inner side of the tread toward the tread surface. The support portion is formed so as to be buried in the body. The support portion has a complex elastic modulus E2* that is greater than a complex elastic modulus E1* of the body. The tread is formed by a first strip and a second strip being alternately wound helically. The first strip is formed of the first rubber composition of the body. The second strip is formed of the second rubber composition of the support portion.

Preferably, in the radial tire, a ratio of the complex elastic modulus E2* to the complex elastic modulus E1* is greater than or equal to 1.2, and is less than or equal to 2.0.

Preferably, in the radial tire, the second strip has a thickness that is less than a thickness of the first strip.

Preferably, in the radial tire, a ratio of the thickness of the second strip to the thickness of the first strip is greater than or equal to 0.2.

Preferably, in the radial tire, grooves are formed in the tread surface. A thickness of the body under each of the grooves is greater than or equal to 0.2 mm.

Preferably, in the radial tire, an absolute value of an angle of a direction in which the support portion extends, relative to a radial direction, is greater than or equal to 0 degrees, and is less than or equal to 45 degrees.

A method for producing a radial tire for use in a two-wheeled vehicle according to the present invention, as defined in claim 1, includes the steps of
(1) extruding a first rubber composition to obtain a first strip;
(2) extruding a second rubber composition to obtain a second strip;
(3) forming a tread by the first strip and the second strip being alternately wound helically, to obtain a raw cover; and
(4) pressurizing and heating the raw cover.

In the radial tire obtained by this production method, the tread includes a body formed of the first rubber composition, and a plurality of support portions that are formed of the second rubber composition, and that are aligned with each other in an axial direction. Each of the plurality of support portions extends from an inner side of the tread toward a tread surface of the tread. The support portion is formed so as to be buried in the body. The support portion has a complex elastic modulus greater than a complex elastic modulus of the body.

In the radial tire, the body having a small complex elastic modulus E1* can contribute to exertion of grip force. In the tire, the support portion having a great complex elastic modulus E2* is formed so as to be buried in the body. The support portion can reduce excessive deformation of a surface of the tread. Also when a temperature of a road surface is increased in summer, the tire can sufficiently exert the grip force even in a long time running performed in an endurance race or the like.

### BRIEF DESCRIPTION OF THE DRAWINGS

FIG. 1 is a cross-sectional view illustrating a portion of a pneumatic tire according to an embodiment of the present invention;
FIG. 2 is an enlarged cross-sectional view of a portion of the tire shown in FIG. 1;
FIG. 3 is a cross-sectional view illustrating a state in which a tread of the tire shown in FIG. 1 is formed;
FIG. 4 is an enlarged cross-sectional view of a portion including a groove of the tire shown in FIG. 1;
FIG. 5 is a cross-sectional view of a portion of a pneumatic tire according to another embodiment of the present invention; and
FIG. 6 is an enlarged cross-sectional view of a portion of the tire shown in FIG. 5.

### DESCRIPTION OF THE PREFERRED EMBODIMENTS

The following will describe in detail the present invention based on preferred embodiments with reference to the accompanying drawing.

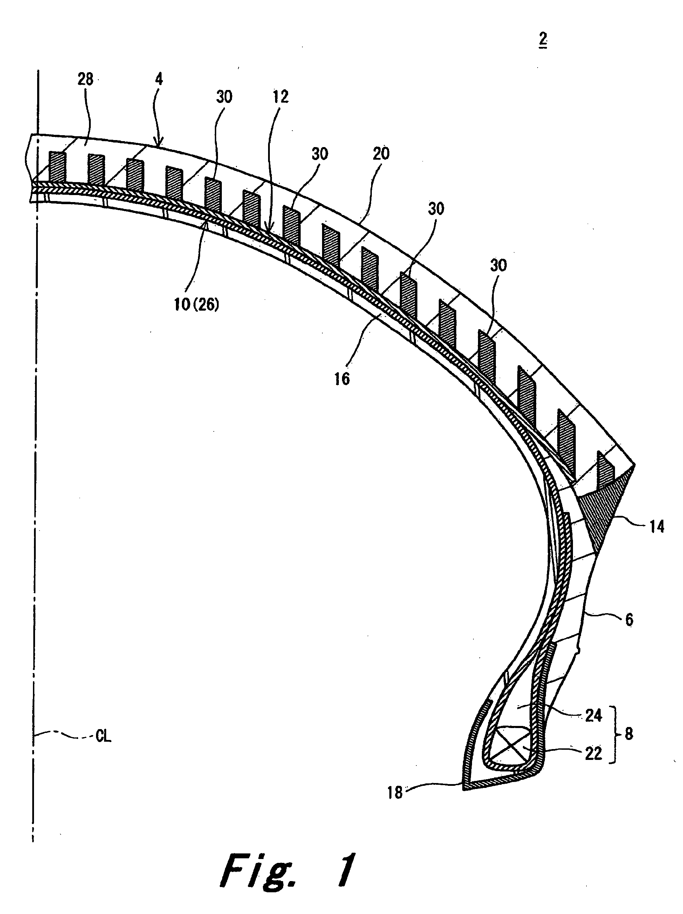

A pneumatic tire 2 shown in FIG. 1 includes a tread 4, sidewalls 6, beads 8, a carcass 10, a band 12, wings 14, an inner liner 16, and chafers 18. The tire 2 is of a tubeless type. The tire 2 is mounted to a two-wheeled vehicle(motorcycle). In FIG. 1, the upward/downward direction represents the radial direction, the leftward/rightward direction represents the axial direction, and the direction orthogonal to the surface of the sheet represents the circumferential direction. The tire 2 has a shape which is almost bilaterally symmetric about an alternate long and short dash line CL shown in FIG. 1. The alternate long and short dash line CL represents the equator plane of the tire 2.

The tread 4 is formed of a crosslinked rubber. The tread 4 has a shape projecting outward in the radial direction. The tread 4 includes a tread surface 20. The tread surface 20 can contact with a road surface. Grooves are formed in the tread surface 20, which is not shown. A tread pattern is formed due to the grooves. The tread 4 may not have grooves formed therein.

The sidewalls 6 extend from the ends, respectively, of the tread 4 approximately inward in the radial direction. The sidewalls 6 are formed of a crosslinked rubber. The sidewalls 6 absorb impact from a road surface due to their flexibility. Further, the sidewalls 6 prevent injury of the carcass 10.

The beads 8 are located approximately inwardly from the sidewalls 6, respectively, in the radial direction. Each bead 8 includes a core 22, and an apex 24 extending from the core 22 outward in the radial direction. The core 22 is formed so as to be ring-shaped. The core 22 is formed so as to be wound with a non-extensible wire. A steel wire is typically used for the core 22. The apex 24 is tapered outward in the radial direction. The apex 24 is formed of a highly hard crosslinked rubber.

The carcass 10 is formed as a carcass ply 26. The carcass ply 26 extends on and between the beads 8 located on both sides, and extends under and along the tread 4 and the sidewalls 6. The carcass ply 26 is turned up around each core 22 from the inner side to the outer side in the axial direction.

The carcass ply 26 is formed of multiple cords aligned with each other, and a topping rubber, which is not shown. An absolute value of an angle of each cord relative to the equator plane usually ranges from 70 degrees to 90 degrees. In other words, the carcass 10 has a radial structure. The tire 2 is superior, in high-speed durability, to tires having carcasses of a bias structure. The cords are typically formed of an organic fiber. Examples of preferable organic fiber include polyester fibers, nylon fibers, rayon fibers, polyethylene naphthalate fibers, and aramid fibers.

The band 12 is located inwardly from the tread 4 in the radial direction. The band 12 is located outwardly of the carcass 10 in the radial direction. The band 12 is layered over the carcass 10. The band 12 includes a cord and a topping rubber, which is not shown. The cord extends substantially in the circumferential direction, and is helically wound. The band 12 has a so-called jointless structure. The band 12 can contribute to rigidity of the tire 2 in the radial direction. Thus, an influence of the centrifugal force exerted during running is reduced. The cord is typically formed of an organic fiber. Examples of preferable organic fiber include nylon fibers, polyester fibers, rayon fibers, polyethylene naphthalate fibers, and aramid fibers.

In the tire 2, the tread 4 includes a body 28 and a plurality of the support portions 30 which are aligned with each other in the axial direction. Each of the plurality of the support portions 30 is layered over and outside the band 12 in the radial direction. The support portion 30 extends from the inner side of the tread 4 toward the tread surface 20.

In the tire 2, the body 28 is formed of a first rubber composition. As shown in the drawings, the body 28 covers the support portion 30. The body 28 forms the tread surface 20. In the tire 2, the body 28 can contact with a road surface.

In the tire 2, a complex elastic modulus E1* of the body 28 is less than a complex elastic modulus E2* of the support portion 30. The body 28 is flexible. The body 28, which is flexible, can contribute to exertion of the grip force of the tire 2. In this viewpoint, the complex elastic modulus E1* of the body 28 is preferably greater than or equal to 2.5 MPa, and is preferably less than or equal to 6.0 MPa.

In the present invention, the complex elastic modulus E1* of the body 28 and the complex elastic modulus E2* of the support portion 30 are measured, in compliance with the standard of "JIS K 6394", by using a viscoelasticity spectrometer (manufactured by Iwamoto Seisakusho), under the following conditions.
Initial strain: 10%
Amplitude: ±2.5%
Frequency: 10 Hz
Deformation mode: tension
Measurement temperature: 100°C

In the tire 2, the support portion 30 is formed of a second rubber composition. As shown in the drawings, the support portion 30 is formed so as to be buried in the body 28. In other words, the body 28 is located outwardly of the support portion 30 in the radial direction. In the tire 2, when the tread surface 20 contacts with a road surface, the body 28 is located between the road surface and the support portion 30.

In the tire 2, the support portion 30 has the complex elastic modulus E2* that is greater than the complex elastic modulus E1* of the body 28. The support portion 30 is hard. The support portion 30, which is hard, can contribute to rigidity of the tread 4. The support portion 30 can effectively reduce deformation of the surface of the tread 4. Therefore, also when a temperature of a road surface is high in summer, the tire 2 can sufficiently exert the grip force even in a long time running performed in an endurance race or the like. In this viewpoint, the complex elastic modulus E2* of the support portion 30 is preferably greater than or equal to 3.6 MPa, and is preferably less than or equal to 12.0 MPa.

In the tire 2, in order to enable the support portion 30 to contribute to reduction of deformation of the surface of the tread 4, and enable the body 28 to contribute to exertion of the grip force, a ratio of the complex elastic modulus E2* of the support portion 30 to the complex elastic modulus E1* of the body 28 is preferably greater than or equal to 1.2, and is more preferably greater than or equal to 1.3, and is even more preferably greater than or equal to 1.4. The ratio is preferably less than or equal to 2.0, and is more preferably less than or equal to 1.9, and is even more preferably less than or equal to 1.8.

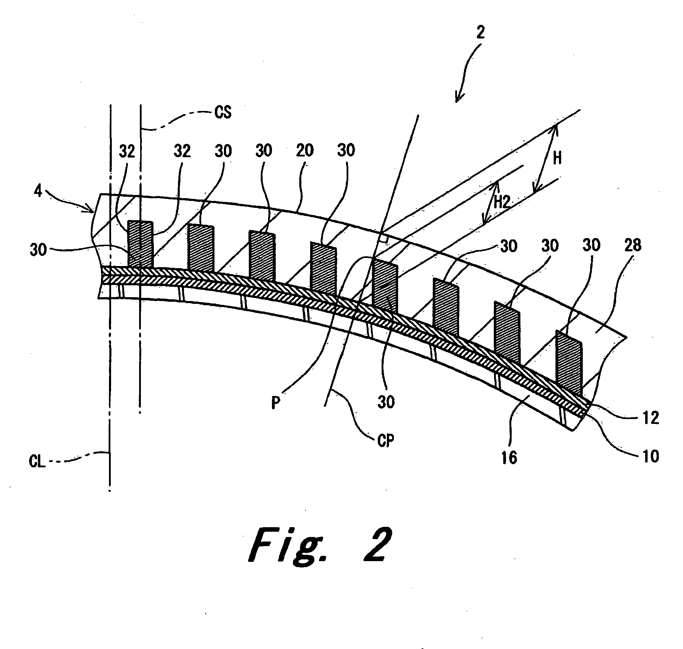

In FIG. 2, a portion of the tire 2 shown in FIG. 1 is enlarged. In FIG. 2, the upward/downward direction represents the radial direction, the leftward/rightward direction represents the axial direction, and the direction orthogonal to the surface of the sheet represents the circumferential direction. In FIG. 2, an alternate long and short dash line CS represents the center line of the support portion 30. The support portion 30 includes a pair of side surfaces 32 that extend from the inner side of the tread 4 toward the tread surface 20. The center line CS extends through the midpoints between both side surfaces 32. In the description herein, the direction in which the center line CS extends corresponds to the direction in which the support portion 30 extends. The absolute value of an angle of the center line CS relative to the equator plane corresponds to the absolute value (hereinafter, referred to as a tilt angle) of an angle of the direction in which the support portion 30 extends, relative to the radial direction.

In the tire 2, in order to enable the support portion 30 to effectively contribute to the rigidity, the tilt angle of the support portion 30 is preferably set so as to be small. In this viewpoint, the tilt angle is preferably less than or equal to 45 degrees, and is more preferably less than or equal to 30 degrees, and is particularly preferably less than or equal to 20 degrees. When the center line CS extends parallel to the equator plane, that is, when the center line CS extends in the radial direction, the tilt angle indicates the lower limit value (0 degrees) thereof.

As shown in the drawings, the center line CS of support portion 30 extends in the radial direction. In the tire 2, the tilt angle of the support portion 30 is 0 degrees.

The tire 2 is produced in the following manner. The first rubber composition is extruded, to obtain a first strip which is tape-shaped. The second rubber composition is extruded, to obtain a second strip which is tape-shaped. The first strip and the second strip are put in a former (not shown) together with other components. In the former, these components are combined with each other.

In the former, the inner liner 16 which is sheet-shaped is wound around a drum, and, thereafter, the carcass ply 26 which is also sheet-shaped is wound. Further, a band component formed of a cord and a topping rubber is helically wound over and around the carcass ply 26 which has been formed in a cylindrical shape, thereby forming the band 12. The tread 4 is formed by using the first strip and the second strip. Thus, a raw cover (unvulcanized tire) is obtained.

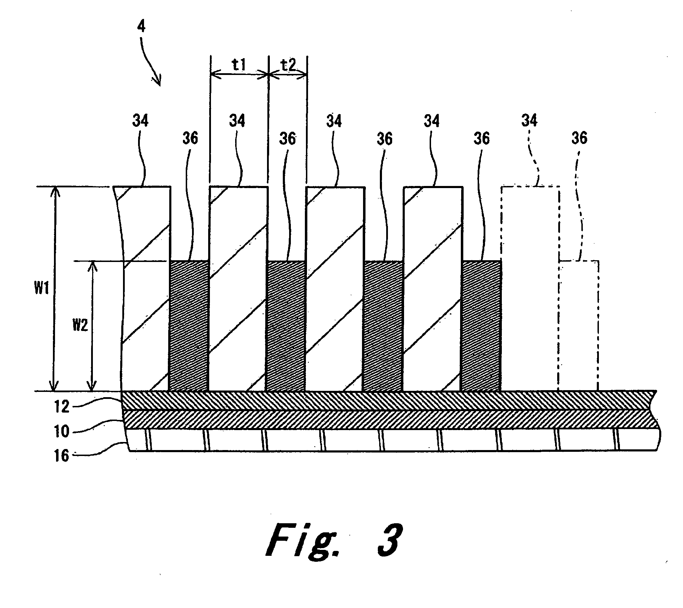

FIG. 3 schematically shows a cross-section of the tread 4 which is being formed. In FIG. 3, the leftward/rightward direction corresponds to the axial direction of the tire 2, and the upward/downward direction corresponds to the radial direction of the tire 2.

In this production method, the first strip 34 and the second strip 36 are alternately wound helically, to form the tread 4. As shown in the drawings, the first strip 34 and the second strip 36 are wound such that the cross-section of the first strip 34 and the cross-section of the second strip 36 alternate in the axial direction on the cross-section of the tread 4. This production method is a strip winding method.

In FIG. 3, a double-headed arrow t1 represents the thickness of the first strip 34. A double-headed arrow t2 represents the thickness of the second strip 36. A double-headed arrow W1 represents the width of the first strip 34. A double-headed arrow W2 represents the width of the second strip 36.

In this production method, in order to facilitate the forming, the thickness t1 of the first strip 34 is preferably greater than or equal to 0.3 mm, and is preferably less than or equal to 3.0 mm. In the same viewpoint, the thickness t2 of the second strip 36 is preferably greater than or equal to 0.3 mm, and is preferably less than or equal to 3.0 mm.

In this production method, in order to facilitate the forming, the width W1 of the first strip 34 is preferably greater than or equal to 5 mm, and is preferably less than or equal to 20 mm. In the same viewpoint, the width W2 of the second strip 36 is preferably greater than or equal to 5 mm, and is preferably less than or equal to 20 mm.

In this production method, the raw cover is put into a mold. Thus, the outer surface of the raw cover contacts with a cavity surface of the mold. The inner surface of the raw cover contacts with a bladder or a core cylinder. The raw cover is pressurized and heated in the mold. A rubber composition of the raw cover flows due to the raw cover being pressurized and heated. Crosslinking reaction of the rubber occurs due to the raw cover being heated, to obtain the radial tire 2. In the tire 2 having been thus produced, the first strip 34 can form the body 28 of the tread 4, and the second strip 36 can form the support portion 30 of the tread 4.

In this production method, as shown in FIG. 3, the second strip 36 preferably has the thickness t2 that is less than the thickness t1 of the first strip 34. In other words, a ratio of the thickness t2 of the second strip 36 to the thickness t1 of the first strip 34 is preferably less than 1.0. Thus, excessive increase of rigidity caused due to the support portions 30 being hard can be reduced. In order to enable the support portion 30 to appropriately contribute to reduction of deformation of the surface of the tread 4, the ratio is preferably greater than or equal to 0.2.

In this production method, as shown in FIG. 3, the first strip 34 has the width W1 that is greater than the width W2 of the second strip 36. Since the first strip 34 projects outwardly beyond the second strip 36 in the radial direction, the first strip 34 contacts with the cavity surface of the mold, and the first strip 34 is pressed in the raw cover put into the mold. Thus, the first strip 34 is squashed, and the second strip 36 is covered with the first rubber composition forming the first strip 34.

In this production method, for forming the support portion 30 so as to be buried in the body 28, a ratio of the width W1 of the first strip 34 to the width W2 of the second strip 36 is preferably less than or equal to 2.0. In order to enable the support portion 30 to appropriately contribute to reduction of deformation of the surface of the tread 4, the ratio is preferably greater than or equal to 1.2.

In FIG. 2, a point P represents the outermost corner of the support portion 30 in the radial direction. A solid line CP represents a line that is normal to the tread surface 20, and passes through the point P. A double-headed arrow H represents the thickness of the tread 4. The thickness H is obtained by the length from the outer surface of the band 12 to the tread surface 20 being measured along the normal line CP. A double-headed arrow H2 represents the height of the support portion 30. The height H2 is obtained by the length from the outer surface of the band 12 to the point P being measured along the normal line CP.

In the tire 2, a ratio of the height H2 of the support portion 30 to the thickness H of the tread 4 is preferably greater than or equal to 0.5, and is preferably less than 1.0. When the ratio is set so as to be greater than or equal to 0.5, the support portions 30 can effectively contribute to the rigidity of the tire 2. The deformation of the tread 4 is appropriately reduced, so that the tire 2 can sufficiently exert the grip force. When the ratio is set so as to be less than 1.0, the support portion 30 is assuredly covered with the body 28. Thus, the body 28 forms the tread surface 20, and therefore the tire 2 can stably exert the grip force.

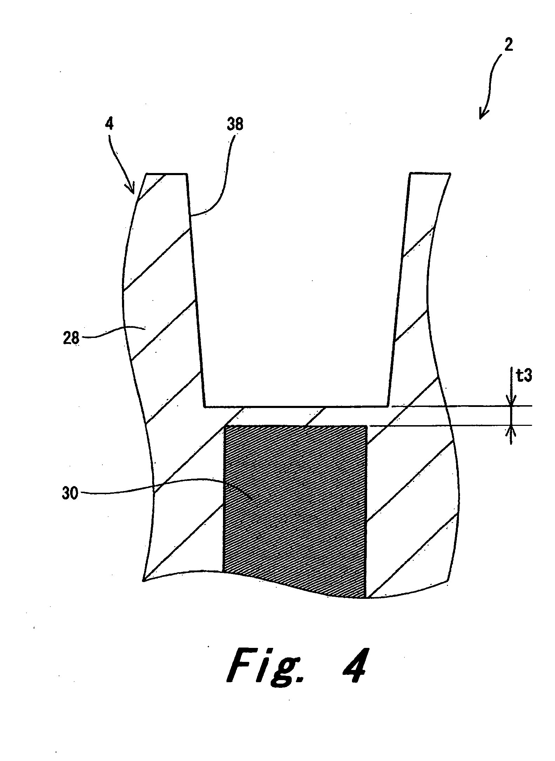

FIG. 4 shows an example of a portion including a groove 38 of the tire 2 shown in FIG. 1. As described above, in this production method, the first strip 34 is squashed, and the second strip 36 is covered with the first rubber composition forming the first strip 34. Therefore, in the tire 2 produced in this production method, the support portion 30 is not exposed even from the groove 38.

In FIG. 4, a double-headed arrow t3 represents the thickness of the body 28 covering the support portion 30. The thickness t3 is represented as the length from the end surface of the support portion 30 to the bottom of the groove 38. In the tire 2, the thickness t3 is preferably greater than or equal to 0.2 mm. Thus, generation of a crack due to the support portion 30 being exposed can be effectively prevented.

In the present invention, the dimension and the angle in each member of the tire 2 and the tire described below are measured in a state where the tire 2 is assembled in a normal rim, and the tire 2 is filled with air so as to obtain a normal internal pressure. During the measurement, no load is applied to the tire 2. In the description of the present invention, the normal rim represents a rim which is specified according to the standard with which the tire 2 complies. The "standard rim" in the JATMA standard, the "Design Rim" in the TRA standard, and the "Measuring Rim" in the ETRTO standard are included in the normal rim. In the description of the present invention, the normal internal pressure represents an internal pressure which is specified according to the standard with which the tire 2 complies. The "maximum air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are included in the normal internal pressure.

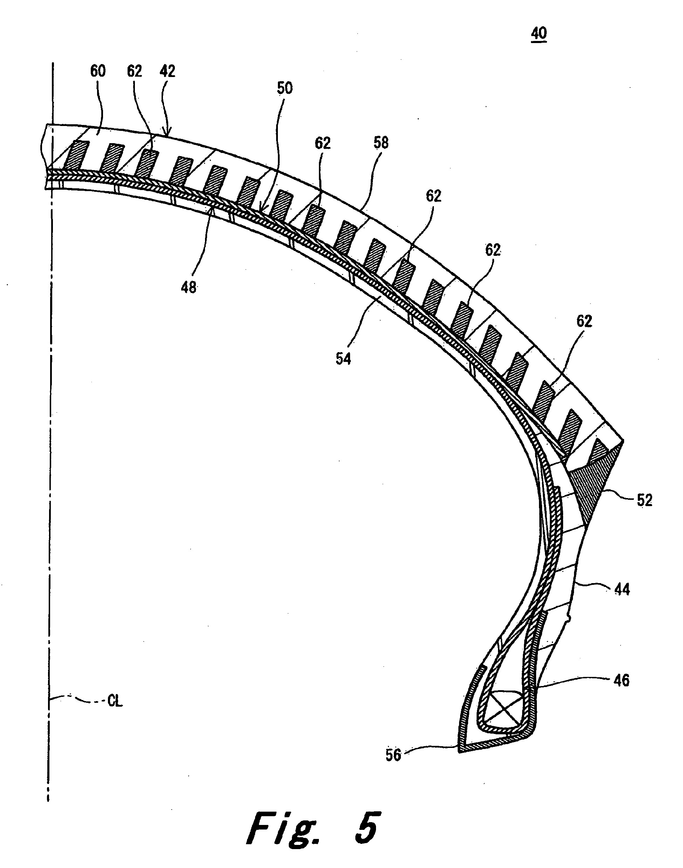

FIG. 5 is a cross-sectional view of a portion of a pneumatic tire 40 according to another embodiment of the present invention. The tire 40 is of a tubeless type. The tire 40 is mounted to a two-wheeled vehicle. In FIG. 5, the upward/downward direction represents the radial direction, the leftward/rightward direction represents the axial direction, and the direction orthogonal to the surface of the sheet represents the circumferential direction. The tire 40 has a shape which is almost bilaterally symmetric about an alternate long and short dash line CL shown in FIG. 5. The alternate long and short dash line CL represents the equator plane of the tire 40.

The tire 40 includes a tread 42, sidewalls 44, beads 46, a carcass 48, a band 50, wings 52, an inner liner 54, and chafers 56. The tire 40 has the same structure as the tire 2 shown in FIG. 1 except for the tread 42.

The tread 42 of the tire 40 is formed of a crosslinked rubber. The tread 42 has a shape projecting outward in the radial direction. The tread 42 includes a tread surface 58. The tread surface 58 can contact with a road surface.

The tread 42 includes a body 60 and multiple support portions 62 which are aligned with each other in the axial direction. Each of the support portions 62 is layered over and outside the band 50 in the radial direction. The support portion 62 extends from the inner side of the tread 42 toward the tread surface 58.

In the tire 40, the body 60 is formed of a first rubber composition. As shown in the drawings, the body 60 covers the support portion 62. The body 60 forms the tread surface 58. In the tire 40, the body 60 can contact with a road surface.

In the tire 40, a complex elastic modulus E1* of the body 60 is less than a complex elastic modulus E2* of the support portion 62. The body 60 is flexible. The body 60, which is flexible, can contribute to exertion of the grip force of the tire 40. In this viewpoint, the complex elastic modulus E1* of the body 60 is preferably greater than or equal to 2.5 MPa, and is preferably less than or equal to 6.0 MPa.

In the tire 40, the support portion 62 is formed of a second rubber composition. As shown in the drawings, the support portion 62 is formed so as to be buried in the body 60. In the tire 40, when the tread surface 58 contacts with a road surface, the body 60 is located between the road surface and the support portion 62.

In the tire 40, the support portion 62 has the complex elastic modulus E2* that is greater than the complex elastic modulus E1* of the body 60. The support portion 62 is hard. The support portions 62, which is hard, can contribute to rigidity of the tread 42. The support portion 62 can effectively reduce deformation of the surface of the tread 42. Therefore, also when a temperature of a road surface is high in summer, the tire 40 can sufficiently exert the grip force even in a long time running performed in an endurance race or the like. In this viewpoint, the complex elastic modulus E2* of the support portion 62 is preferably greater than or equal to 3.6 MPa, and is preferably less than equal to 12.0 MPa.

In the tire 40, in order to enable the support portion 62 to contribute to reduction of deformation of the surface of the tread 42, and enable the body 60 to contribute to exertion of the grip force, a ratio of the complex elastic modulus E2* of the support portion 62 to the complex elastic modulus E1* of the body 60 is preferably greater than or equal to 1.2, and is more preferably greater than or equal to 1.3, and is even more preferably greater than or equal to 1.4. The ratio is preferably less than or equal to 2.0, and is more preferably less than or equal to 1.9, and is even more preferably less than or equal to 1.8.

As shown in the drawings, the support portion 62 extends so as to be tilted relative to the radial direction. In the tire 40, the support portion 62 is tilted outward in the axial direction, from the inner side toward the outer side in the radial direction. Alternatively, the tread 42 may be structured such that the support portion 62 is tilted inward in the axial direction, from the inner side toward the outer side in the radial direction.

Similarly to the tire 2 shown in FIG. 1, a first tape-shaped strip formed of the first rubber composition and a second tape-shaped strip formed of the second rubber composition are alternately wound helically, to form the tread 42 of the tire 40. Each strip is wound such that the cross-section of the strip extends so as to be tilted relative to the radial direction, which is not shown. Thus, the tread 42 is formed that includes the support portion 62 which extends so as to be tilted relative to the radial direction. Also in the tire 40, similarly to the tire 2 shown in FIG. 1, the first strip can form the body 60, and the second strip can form the support portion 62.

As described above, the support portion 62 is hard. In this production method, in order to reduce excessive increase of rigidity caused due to the support portion 62 being hard, the second strip preferably has a thickness t2 that is less than a thickness t1 of the first strip. In other words, a ratio of the thickness t2 of the second strip to the thickness t1 of the first strip is preferably less than 1.0. In order to enable the support portion 62 to appropriately contribute to reduction of deformation of the surface of the tread 42, the ratio is preferably greater than or equal to 0.2.

In this production method, for forming the support portion 62 so as to be buried in the body 60, the first strip has a width W1 that is greater than a width W2 of the second strip. In other words, a ratio of the width W1 of the first strip to the width W2 of the second strip is preferably less than or equal to 2.0. In order to enable the support portion 62 to appropriately contribute to reduction of deformation of the surface of the tread 42, the ratio is preferably greater than or equal to 1.2.

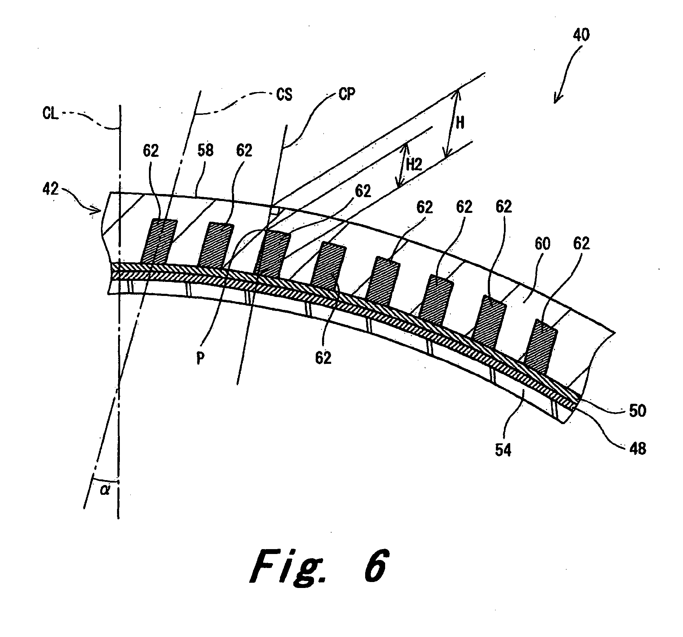

In FIG. 6, a portion of the tire 40 shown in FIG. 5 is enlarged. In FIG. 6, the upward/downward direction represents the radial direction, the leftward/rightward direction represents the axial direction, and the direction orthogonal to the surface of the sheet represents the circumferential direction. In FIG. 6, an alternate long and short dash line CS represents the center line of the support portion 62. The direction in which the center line CS extends corresponds to the direction in which the support portion 62 extends. In FIG. 6, an angle of the center line CS to the equator plane is represented as an angle α. The absolute value of the angle α corresponds to the absolute value (hereinafter, referred to as a tilt angle α) of an angle of the direction in which the support portion 62 extends, relative to the radial direction.

In the tire 40, in order to enable the support portion 62 to effectively contribute to the rigidity, the tilt angle α of the support portion 62 is preferably set so as to be small. In this viewpoint, the tilt angle α is preferably less than or equal to 45 degrees, and is more preferably less than or equal to 30 degrees, and is particularly preferably less than or equal to 20 degrees.

In FIG. 6, a point P represents the outermost corner of the support portion 62 in the radial direction. A solid line CP represents a line that is normal to the tread surface 58, and passes through the point P. A double-headed arrow H represents the thickness of the tread 42. The thickness H is obtained by the length from the outer surface of the band 50 to the tread surface 58 being measured along the normal line CP. A double-headed arrow H2 represents the height of the support portion 62. The height H2 is obtained by the length from the outer surface of the band 50 to the point P being measured along the normal line CP.

In the tire 40, a ratio of the height H2 of the support portion 62 to the thickness H of the tread 42 is preferably greater than or equal to 0.5, and is preferably less than 1.0. When the ratio is set so as to be greater than or equal to 0.5, the support portion 62 can effectively contribute to the rigidity of the tire 40. The deformation of the tread 42 is appropriately reduced, so that the tire 40 can sufficiently exert the grip force. When the ratio is set so as to be less than 1.0, the support portion 62 are assuredly covered with the body 60. Thus, the body 60 forms the tread surface 58, and therefore the tire 40 can stably exert the grip force.

### EXAMPLES

Hereinafter, effects of the present invention will become apparent according to examples. However, the present invention should not be restrictively construed based on the description of examples.

### [Example 1]

A radial tire (size: 180/55ZR17), for use in two-wheeled vehicles, having the fundamental structure shown in FIG. 5 and specifications indicated below in table 1 was obtained. In the production of the tire, the first strip that was formed of the first rubber composition to form the body, and the second strip that was formed of the second rubber composition to form the support portions were alternately wound helically, thereby forming a tread. The thickness t1 of the first strip was 2.0 mm, and the thickness t2 of the second strip was 1.5 mm. Therefore, the ratio t2/t1 of the thickness t2 to the thickness t1 was 0.75. The tread having been thus formed included the body and the multiple support portions that were aligned with each other in the axial direction. Each support portion was tilted outward in the axial direction, from the inner side toward the outer side in the radial direction. This state is represented as "X" in the cells for tilt directions in tables. The tilt angle α of each support portion was 20 degrees. The support portions were formed so as to be buried in the body. The ratio H2/H was 0.8, and the thickness t3 was 0.3 mm. The support portions each had the complex elastic modulus E2* greater than the complex elastic modulus E1* of the body. The complex elastic modulus E1* of the body was 3.5 MPa, and the complex elastic modulus E2* of the support portions was 5.3 MPa. Therefore, the ratio E2*/E1* was 1.5.

### [Examples 2 to 7]

Tires were each obtained so as to have the same structure as that for example 1 except that the thickness t1 and the thickness t2 were different from those for example 1, and thus the ratios t2/t1 were as indicated below in table 1 and table 2.

### [Examples 8 to 13 and comparative example 2]

Tires were each obtained so as to have the same structure as that for example 1 except that the complex elastic modulus E2* of the support portions was different from that for example 1, and thus the ratios E2*/E1* were as indicated below in table 2 and table 3.

### [Examples 14 to 15 and comparative example 3]

Tires were each obtained so as to have the same structure as that for example 1 except that the ratios H2/H were as indicated below in table 3. In comparative example 3, the support portions were not formed so as to be buried in the body.

### [Examples 16 to 19]

Tires were each obtained so as to have the same structure as that for example 1 except that the thicknesses t3 were as indicated below in table 4.

### [Examples 24 to 25]

Tires were each obtained so as to have the same structure as that for example 1 except that the tilt angles α were as indicated below in table 5.

### [Examples 20 to 22]

Tires were each obtained so as to have the same structure as that for example 1 except that the direction in which the support portions extended was different from that for example 1, and the tilt angles α were as indicated below in table 5. The support portions in examples 20 to 22 were tilted inward in the axial direction, from the inner side toward the outer side in the radial direction. The direction in which the support portions of example 22 were tilted was opposite to that for example 1. The direction in which the support portions of example 21 were tilted was opposite to that for example 24. The direction in which the support portions of example 20 were tilted was opposite to that for example 25. These states are represented as "Y" in the cells for tilt directions in table.

### [Example 23]

A tire was obtained so as to have the same structure as that for example 1 except that the support portions were formed so as to extend in the radial direction as shown in FIG. 1. The tilt angle α of each support portion in example 23 was 0 degrees.

### [Examples 26 to 31]

Tires were each obtained so as to have the same structure as that for example 1 except that the thickness t1 and the thickness t2 were different from those for example 1, and thus the ratios t2/t1 were as indicated below in table 6.

### [Formability]

1000 tires were produced, and formability thereof was evaluated. The results are indicated below in table 1 to table 6. In tables, "A" represents a case where the tires were stably produced, "B" represents a case where although the tires were produced, some improvement in the production process steps was needed, and "C" represents a case where a trouble occurred during production, and the tires were not able to be stably produced.

### [Grip force, rigidity, and comprehensive performance]

Tires having been produced for examples were each mounted to a rear wheel of a sport-type two-wheeled vehicle (4-cycle) which had an engine displacement of 600 cc, and the tire was filled with air such that an internal pressure became 200 kPa. A commercially available tire (size: 120/70ZR17) was mounted to a front wheel, and the tire was filled with air such that an internal pressure became 200 kPa. This two-wheeled vehicle was caused to run on a circuit course having an asphalt road surface, and a sensory evaluation by a rider was made. A grip force, a rigidity, and a comprehensive performance were evaluated. The results are indicated below as indexes in table 1 to table 6. A value greater than or equal to 3.0 represents an acceptable quality. In examples 16 to 19, bottom portions of grooves of the tires were observed after running, to check for presence or absence of a crack. The results are indicated below in table 4. In table 4, "G" represents a case where no crack was found, "NG" represents a case where a crack was found.

**Table 1 Evaluation results**

| | Comp. example 1 | Example 2 | Example 3 | Example 1 | Example 4 | Example 5 |
|---|---|---|---|---|---|---|
| Thickness t1 [mm] | - | 3.0 | 2.5 | 2.0 | 1.8 | 1.6 |
| Thickness t2 [mm] | - | 0.5 | 0.5 | 1.5 | 1.5 | 1.5 |
| t2/t1 | - | 0.17 | 0.2 | 0.75 | 0.83 | 0.94 |
| Complex elastic modulus E1* [MPa] | - | 3.5 | 3.5 | 3.5 | 3.5 | 3.5 |
| Complex elastic modulus E2* [MPa] | - | 5.3 | 5.3 | 5.3 | 5.3 | 5.3 |
| E2^{*}/E1* | - | 1.5 | 1.5 | 1.5 | 1.5 | 1.5 |
| H2/H | - | 0.8 | 0.8 | 0.8 | 0.8 | 0.8 |
| Thickness t3 [mm] | - | 0.3 | 0.3 | 0.3 | 0.3 | 0.3 |
| Tilt angle α [degree] | - | 20 | 20 | 20 | 20 | 20 |
| Tilt direction | - | X | X | X | X | X |
| Formability | A | A | A | A | A | A |
| Grip force | 4.5 | 4.0 | 3.5 | 4.5 | 4.2 | 3.8 |
| Rigidity | 2.0 | 3.0 | 3.5 | 4.5 | 4.6 | 4.7 |
| Comprehensive evaluation | 2.0 | 3.0 | 3.5 | 4.5 | 4.2 | 3.8 |

**Table 2 Evaluation results**

| | Example 6 | Example 7 | Comp. example 2 | Example 8 | Example 9 | Example 10 |
|---|---|---|---|---|---|---|
| Thickness t1 [mm] | 1.5 | 1.0 | 2.0 | 2.0 | 2.0 | 2.0 |
| Thickness t2 [mm] | 1.5 | 1.5 | 1.5 | 1.5 | 1.5 | 1.5 |
| t2/t1 | 1.0 | 1.5 | 0.75 | 0.75 | 0.75 | 0.75 |
| Complex elastic modulus E1* [MPa] | 3.5 | 3.5 | 3.5 | 3.5 | 3.5 | 3.5 |
| Complex elastic modulus E2* [MPa] | 5.3 | 5.3 | 2.8 | 4.2 | 4.9 | 5.6 |
| E2*/E1* | 1.5 | 1.5 | 0.8 | 1.2 | 1.4 | 1.6 |
| H2/H | 0.8 | 0.8 | 0.8 | 0.8 | 0.8 | 0.8 |
| Thickness t3 [mm] | 0.3 | 0.3 | 0.3 | 0.3 | 0.3 | 0.3 |
| Tilt angle α [degree] | 20 | 20 | 20 | 20 | 20 | 20 |
| Tilt direction | X | X | X | X | X | X |
| Formability | A | A | A | A | A | A |
| Grip force | 3.5 | 2.5 | 4.0 | 4.1 | 4.3 | 4.5 |
| Rigidity | 4.9 | 5.0 | 2.0 | 3.5 | 4.0 | 4.5 |
| Comprehensive evaluation | 3.5 | 3.0 | 2.0 | 3.5 | 4.0 | 4.5 |

**Table 3 Evaluation results**

| | Example 11 | Example 12 | Example 13 | Example 14 | Example 15 | Comp. example 3 |
|---|---|---|---|---|---|---|
| Thickness t1 [mm] | 2.0 | 2.0 | 2.0 | 2.0 | 2.0 | 2.0 |
| Thickness t2 [mm] | 1.5 | 1.5 | 1.5 | 1.5 | 1.5 | 1.5 |
| t2/t1 | 0.75 | 0.75 | 0.75 | 0.75 | 0.75 | 0.75 |
| Complex elastic modulus E1* [MPa] | 3.5 | 3.5 | 3.5 | 3.5 | 3.5 | 3.5 |
| Complex elastic modulus E2* [MPa] | 6.3 | 7.0 | 8.75 | 5.3 | 5.3 | 5.3 |
| E2*/E1* | 1.8 | 2.0 | 2.5 | 1.5 | 1.5 | 1.5 |
| H2/H | 0.8 | 0.8 | 0.8 | 0.3 | 0.5 | 1.0 |
| Thickness t3 [mm] | 0.3 | 0.3 | 0.3 | 0.3 | 0.3 | 0.3 |
| Tilt angle α [degree] | 20 | 20 | 20 | 20 | 20 | 20 |
| Tilt direction | X | X | X | X | X | X |
| Formability | A | A | A | A | A | A |
| Grip force | 4.0 | 3.5 | 2.5 | 4.0 | 4.3 | 3.5 |
| Rigidity | 4.8 | 5.0 | 5.0 | 2.5 | 3.5 | 5.0 |
| Comprehensive evaluation | 4.0 | 3.5 | 3.0 | 3.0 | 3.5 | 3.5 |

**Table 4 Evaluation results**

| | Example 16 | Example 17 | Example 18 | Example 19 |
|---|---|---|---|---|
| Thickness t1 [mm] | 2.0 | 2.0 | 2.0 | 2.0 |
| Thickness t2 [mm] | 1.5 | 1.5 | 1.5 | 1.5 |
| t2/t1 | 0.75 | 0.75 | 0.75 | 0.75 |
| Complex elastic modulus E1* [MPa] | 3.5 | 3.5 | 3.5 | 3.5 |
| Complex elastic modulus E2* [MPa] | 5.3 | 5.3 | 5.3 | 5.3 |
| E2*/E1* | 1.5 | 1.5 | 1.5 | 1.5 |
| H2/H | 0.8 | 0.8 | 0.8 | 0.8 |
| Thickness t3 [mm] | 0.1 | 0.2 | 0.5 | 1.0 |
| Tilt angle α [degree] | 20 | 20 | 20 | 20 |
| Tilt direction | X | X | X | X |
| Formability | A | A | A | A |
| Grip force | 4.5 | 4.5 | 4.5 | 4.5 |
| Rigidity | 4.5 | 4.5 | 4.5 | 4.5 |
| Comprehensive evaluation | 4.5 | 4.5 | 4.5 | 4.5 |
| Crack | NG | G | G | G |

**Table 5 Evaluation results**

| | Example 20 | Example 21 | Example 22 | Example 23 | Example 24 | Example 25 |
|---|---|---|---|---|---|---|
| Thickness t1 [mm] | 2.0 | 2.0 | 2.0 | 2.0 | 2.0 | 2.0 |
| Thickness t2 [mm] | 1.5 | 1.5 | 1.5 | 1.5 | 1.5 | 1.5 |
| t2/t1 | 0.75 | 0.75 | 0.75 | 0.75 | 0.75 | 0.75 |
| Complex elastic modulus E1* [MPa] | 3.5 | 3.5 | 3.5 | 3.5 | 3.5 | 3.5 |
| Complex elastic modulus E2* [MPa] | 5.3 | 5.3 | 5.3 | 5.3 | 5.3 | 5.3 |
| E2*/E1* | 1.5 | 1.5 | 1.5 | 1.5 | 1.5 | 1.5 |
| H2/H | 0.8 | 0.8 | 0.8 | 0.8 | 0.8 | 0.8 |
| Thickness t3 [mm] | 0.3 | 0.3 | 0.3 | 0.3 | 0.3 | 0.3 |
| Tilt angle a [degree] | 60 | 45 | 20 | 0 | 45 | 60 |
| Tilt direction | Y | Y | Y | - | X | X |
| Formability | C | A | A | A | A | C |
| Grip force | 2.5 | 3.0 | 3.3 | 4.0 | 4.0 | 3.5 |
| Rigidity | 5.0 | 5.0 | 5.0 | 4.8 | 3.5 | 3.0 |
| Comprehensive evaluation | 3.0 | 3.2 | 3.3 | 4.0 | 3.5 | 3.0 |

**Table 6 Evaluation results**

| | Example 26 | Example 27 | Example 28 | Example 29 | Example 30 | Example 31 |
|---|---|---|---|---|---|---|
| Thickness t1 [mm] | 3.0 | 3.0 | 3.0 | 2.0 | 1.0 | 0.6 |
| Thickness t2 [mm] | 0.6 | 1.5 | 2.5 | 0.5 | 0.5 | 0.5 |
| t2/t1 | 0.2 | 0.5 | 0.83 | 0.25 | 0.5 | 0.83 |
| Complex elastic modulus E1* [MPa] | 3.5 | 3.5 | 3.5 | 3.5 | 3.5 | 3.5 |
| Complex elastic modulus E2* [MPa] | 5.3 | 5.3 | 5.3 | 5.3 | 5.3 | 5.3 |
| E2*/E1* | 1.5 | 1.5 | 1.5 | 1.5 | 1.5 | 1.5 |
| H2/H | 0.8 | 0.8 | 0.8 | 0.8 | 0.8 | 0.8 |
| Thickness t3 [mm] | 0.3 | 0.3 | 0.3 | 0.3 | 0.3 | 0.3 |
| Tilt angle α [degree] | 20 | 20 | 20 | 20 | 20 | 20 |
| Tilt direction | X | X | X | X | X | X |
| Formability | B | B | B | B | B | B |
| Grip force | 3.5 | 4.0 | 4.2 | 3.6 | 4.0 | 4.2 |
| Rigidity | 3.5 | 4.0 | 4.6 | 3.6 | 4.0 | 4.6 |
| Comprehensive evaluation | 3.5 | 4.0 | 4.2 | 3.6 | 4.0 | 4.2 |

As indicated in table 1 to table 6, evaluations for the tires of examples are higher than evaluations for the tires of comparative examples. These evaluation results clearly indicate that the present invention is superior.

The radial tire described above is applicable to various vehicles. The application described above is merely an example.

The foregoing description is in all aspects illustrative, and various modifications can be devised without departing from the essential features of the invention.

## Claims

1. A method for producing a radial tire for use in a two-wheeled vehicle, the method comprising the steps of:
extruding a first rubber composition to obtain a first strip (34);
extruding a second rubber composition to obtain a second strip (36);
forming a tread (4) by the first strip (34) and the second strip (36) being alternately wound helically, to obtain α raw cover, wherein the width (W1) of the first strip (34) is greater than the width (W2) of the second strip (36) so that the first strip (34) projects outwardly beyond the second strip (36) in the radial direction; and
pressurizing and heating the raw cover in a mold so that the first strip (34) is squashed to cover the second strip (36), wherein
in the radial tire obtained by the pressurizing and heating, the tread (4) includes a body (28) formed of the first rubber composition, and a plurality of support portions (30) that are formed of the second rubber composition, and that are aligned with each other in an axial direction,
each of the plurality of support portions (30) extends from an inner side of the tread (4) toward a tread surface of the tread (4),
the support portions (30) are formed so as to be buried in the body (28), and have a complex elastic modulus greater than a complex elastic modulus of the body (28).

2. The method of claim 1, wherein a ratio of the width (W1) of the first strip (34) to the width (W2) of the second strip (36) is in a range of 1.2 to 2.0.

3. The method of claim 1 or 2, wherein the width (W1) of the first strip (34) is in a range of 5 to 20 mm.

4. The method of anyone of claims 1 to 3, wherein the width (W2) of the second strip (36) is in a range of 5 to 20 mm.

5. The method of anyone of claims 1 to 4, wherein the second strip (36) has a thickness (t2) that is less than a thickness (t1) of the first strip (34).

6. The method of claim 5, wherein a ratio of the thickness (t2) of the second strip (36) to the thickness (t1) of the first strip (34) is greater than or equal to 0.2.

7. The method of claim 5 or 6, wherein the thickness (t1) of the first strip (34) is in a range of 0.3 to 3.0 mm.

8. The method of anyone of claims 5 to 7, wherein the thickness (t2) of the second strip (36) is in a range of 0.3 to 3.0 mm.

## Patentansprüche

1. Verfahren zum Herstellen eines Radialreifens zur Verwendung in einem Zweiradfahrzeug, wobei das Verfahren die Schritte umfasst, dass:
eine erste Kautschukmischung extrudiert wird, um einen ersten Streifen (34) zu erhalten;
eine zweite Kautschukmischung extrudiert wird, um einen zweiten Streifen (36) zu erhalten;
eine Lauffläche (4) durch den ersten Streifen (34) und den zweiten Streifen (36) gebildet wird, die abwechselnd wendelförmig gewickelt werden, um eine Rohdecke zu erhalten, wobei die Breite (W1) des ersten Streifens (34) größer als die Breite (W2) des zweiten Streifens (36) ist, so dass der erste Streifen (34) in der radialen Richtung nach außen über den zweiten Streifen (36) hinaus vorsteht; und
die Rohdecke in einer Form unter Druck gesetzt und erwärmt wird, so dass der erste Streifen (34) gequetscht wird, um den zweiten Streifen (36) zu bedecken, wobei
in dem Radialreifen, der durch Unterdrucksetzen und Erwärmen erhalten wird, die Lauffläche (4) einen Körper (28), der aus der ersten Kautschukmischung gebildet ist, und eine Mehrzahl von Stützabschnitten (30) umfasst, die aus der zweiten Kautschukmischung gebildet sind, und die miteinander in einer axialen Richtung ausgerichtet sind,
wobei jeder der Mehrzahl von Stützabschnitten (30) sich von einer Innenseite der Lauffläche (4) zu einer Laufflächen-Oberfläche der Lauffläche (4) hin erstreckt,
wobei die Stützabschnitte (30) derart gebildet sind, dass sie in dem Körper (38) vergraben sind, und einen komplexen Elastizitätsmodul aufweisen, der größer als ein komplexer Elastizitätsmodul des Körpers (28) ist.

2. Verfahren nach Anspruch 1,
wobei ein Verhältnis der Breite (W1) des ersten Streifens (34) zu der Breite (W2) des zweiten Streifens (36) in einem Bereich von 1,2 bis 2,0 liegt.

3. Verfahren nach Anspruch 1 oder 2,
wobei die Breite (W1) des ersten Streifens (34) in einem Bereich von 5 bis 20 mm liegt.

4. Verfahren nach einem der Ansprüche 1 bis 3,
wobei die Breite (W2) des zweiten Streifens (36) in einem Bereich von 5 bis 20 mm liegt.

5. Verfahren nach einem der Ansprüche 1 bis 4,
wobei der zweite Streifen (36) eine Dicke (t2) aufweist, die kleiner ist als eine Dicke (t1) des ersten Streifens (34).

6. Verfahren nach Anspruch 5,
wobei ein Verhältnis der Dicke (t2) des zweiten Streifens (36) zu der Dicke (t1) des ersten Streifens (34) größer als oder gleich 0,2 ist.

7. Verfahren nach Anspruch 5 oder 6,
wobei die Dicke (t1) des ersten Streifens (34) in einem Bereich von 0,3 bis 3,0 mm liegt.

8. Verfahren nach einem der Ansprüche 5 bis 7,
wobei die Dicke (t2) des zweiten Streifens (36) in einem Bereich von 0,3 bis 3,0 mm liegt.

## Revendications

1. Procédé pour produire un pneumatique radial destiné à être utilisé dans un véhicule à deux roues, le procédé comprenant les étapes consistant à :
extruder une première composition à base de caoutchouc pour obtenir une première bande (34) ;
extruder une seconde composition à base de caoutchouc pour obtenir une seconde bande (36) ;
former une bande de roulement (4) en enroulant alternativement en hélice la première bande (34) et la seconde bande (36), pour obtenir une couverture brute, dans lequel la largeur (W1) de la première bande (34) est plus grande que la largeur (W2) de la seconde bande (36), de telle sorte que la première bande (34) se projette vers l'extérieur au-delà de la seconde bande (36) dans la direction radiale ; et
mettre sous pression et chauffer la couverture brute dans un moule de telle façon que la première bande (34) est écrasée pour couvrir la seconde bande (36), dans lequel
dans le pneumatique radial obtenu par la mise sous pression et le chauffage, la bande de roulement (4) inclut un corps (28) formé par la première composition à base de caoutchouc, et une pluralité de portions de support (30) qui sont formées de la seconde composition à base de caoutchouc et qui sont alignées les unes avec les autres dans une direction axiale,
chacune de la pluralité de portions de support (30) s'étend depuis un côté intérieur de la bande de roulement (4) vers une surface de roulement de la bande de roulement (4),
les portions de support (30) sont formées de manière à être noyées dans le corps (28) et ont un module d'élasticité complexe supérieur au module d'élasticité complexe du corps (28).

2. Procédé selon la revendication 1, dans lequel un rapport de la largeur (W1) de la première bande (34) sur la largeur (W2) de la seconde bande (36) est dans une plage de 1,2 à 2,0.

3. Procédé selon la revendication 1 ou 2, dans lequel la largeur (W1) de la première bande (34) est dans une plage de 5 à 20 mm.

4. Procédé selon le quelconque des revendications 1 à 3, dans lequel la largeur (W2) de la seconde bande (36) est dans une plage de 5 à 20 mm.

5. Procédé selon l'une quelconque des revendications 1 à 4, dans lequel la seconde bande (36) a une épaisseur (t2) qui est plus faible qu'une épaisseur (t1) de la première bande (34).

6. Procédé selon la revendication 5, dans lequel un rapport de l'épaisseur (t2) de la seconde bande (36) sur l'épaisseur (t1) de la première bande (34) est supérieur ou égal à 0,2.

7. Procédé selon la revendication 5 ou 6, dans lequel l'épaisseur (t1) de la première bande (34) est dans une plage de 0,3 à 3,0 mm.

8. Procédé selon l'une quelconque des revendications 5 à 7, dans lequel l'épaisseur (t2) de la seconde bande (36) est dans une plage de 0,3 à 3,0 mm.
